(19) Europäisches Patentamt
European Patent Office
Office européen des brevets

(11) **EP 2 107 694 A1**

(12) **DEMANDE DE BREVET EUROPEEN**

(43) Date de publication:
**07.10.2009 Bulletin 2009/41**

(51) Int Cl.:
*H04B 5/00* (2006.01)  *G06K 7/00* (2006.01)
*G06K 19/07* (2006.01)  *H04B 5/02* (2006.01)

(21) Numéro de dépôt: **09155769.4**

(22) Date de dépôt: **20.03.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**
Etats d'extension désignés:
**AL BA RS**

(30) Priorité: **31.03.2008 FR 0852103**

(71) Demandeur: **STMicroelectronics (Rousset) SAS 13790 Rousset (FR)**

(72) Inventeurs:
• **Charles, Alexandre**
  **13390, AURIOL (FR)**
• **Conraux, Jérôme**
  **13530, TRETS (FR)**
• **Malherbe, Alexandre**
  **13530, TRETS (FR)**
• **Tramoni, Alexandre**
  **83370, SAINT AYGULF (FR)**

(74) Mandataire: **de Beaumont, Michel**
  **1bis, rue Champollion**
  **38000 Grenoble (FR)**

(54) **Terminal d'émission-réception radiofréquence par couplage inductif**

(57) L'invention concerne un procédé et un dispositif d'émission-réception par couplage inductif comportant des moyens (11) de génération d'un signal alternatif destiné à exciter un circuit oscillant et des moyens (12') destinés à moduler l'impédance du circuit oscillant lorsque des données doivent être émises, le circuit oscillant comportant un élément inductif (L1) formant antenne en parallèle avec un premier élément capacitif (C2), un deuxième et un troisième éléments capacitifs (C1) de même valeur en série avec un interrupteur (K), le tout en parallèle sur le premier élément capacitif et l'antenne, les moyens de modulation étant connectés aux bornes (21, 22) de l'antenne, deux bornes (23, 24) des moyens de génération du signal alternatif étant respectivement connectées aux bornes de l'interrupteur.

Fig 3

Printed by Jouve, 75001 PARIS (FR)

**Description**

<u>Domaine de l'invention</u>

La présente invention concerne de façon générale la transmission de données par couplage inductif et, plus particulièrement, un terminal d'émission-réception sans contact susceptible de fonctionner dans un premier mode, dit lecteur, dans lequel le terminal communique avec un transpondeur électromagnétique distant et un deuxième mode, dit carte, dans lequel le terminal fonctionne comme un transpondeur électromagnétique vis-à-vis d'un autre terminal.

<u>Exposé de l'art antérieur</u>

Un lecteur de cartes sans contact émet un champ magnétique à destination d'un circuit oscillant d'une carte généralement dépourvue d'alimentation autonome. Dans le sens lecteur vers carte, les données sont généralement codées puis transmises en modulation d'amplitude d'une porteuse d'excitation d'un circuit oscillant du lecteur. Dans le sens carte (transpondeur) vers lecteur, les circuits de la carte modulent la charge que constitue le circuit oscillant de la carte sur le champ magnétique du lecteur, par un circuit généralement dit de rétromodulation, par exemple en court-circuitant le circuit d'antenne au moyen d'un interrupteur.

Un terminal radiofréquence à transmission de données par couplage inductif capable de fonctionner en mode carte et en mode lecteur doit être capable de gérer l'encodage et le décodage de trames de données selon différents protocoles.

Des normes fixent les protocoles de communication. On pourra se référer à la norme ISO 14443 à titre d'exemple qui définit que le circuit d'antenne d'un lecteur est excité à une fréquence de l'ordre de 13,56 MHz. La transmission de données dans le sens lecteur vers carte s'effectue par modulation d'amplitude du champ généré avec une profondeur de modulation de 100 % (norme ISO 14443-2/A) ou de 10 % (norme ISO 14443-2/B). Dans le sens carte vers lecteur, la transmission de données s'effectue par modulation de charge au rythme d'une sous-porteuse à une fréquence de l'ordre de 847 kHz, cette modulation étant codée selon un type Manchester pour la norme 14443-2/A ou BPSK pour la norme 14443-2/B.

En mode carte, l'alimentation des circuits est généralement induite par le champ magnétique généré par le lecteur qui constitue le canal de communication entre carte et lecteur. Le signal alternatif d'excitation du circuit oscillant du lecteur constitue alors une porteuse de téléalimentation de la carte.

En mode lecteur, le terminal doit être alimenté (par une batterie ou par un raccordement au réseau de distribution d'énergie) pour émettre le champ magnétique à destination d'une carte.

Dans des dispositifs dédiés, l'antenne (ou inductance du circuit oscillant) du lecteur est souvent adaptée à la fréquence d'émission (par exemple, 13,56 Mhz) et à l'impédance du générateur du signal alternatif, alors que l'antenne (inductance du circuit résonant) d'une carte est souvent accordée sur la fréquence de fonctionnement du système (par exemple, 13,56 MHz).

Si l'antenne du lecteur est accordée mais désadaptée, la transmission n'est pas optimale. De plus, l'onde réfléchie liée à la désadaptation perturbe la détection du signal rétromodulé par la carte.

A l'opposé, si l'antenne de la carte est adaptée mais désaccordée, la récupération d'énergie n'est pas optimisée.

Il en découle que les circuits d'antenne ne sont généralement pas compatibles pour un fonctionnement en mode carte et en mode lecteur. En particulier, il est difficile de n'utiliser qu'une seule antenne pour concevoir un dispositif qui puisse fonctionner à la fois en mode lecteur et en mode carte.

Le document EP-A-1 327 222 décrit un lecteur de circuit intégré sans contact apte à fonctionner en mode lecteur et en mode carte dont la partie réception est associée à des filtres passe-bas et passe-bande inductifs et capacitifs pour admettre un fonctionnement selon différents protocoles. Cela ne peut constituer qu'une adaptation en mode lecteur sans accord optimal en mode carte, ou qu'un accord en mode carte sans adaptation optimale en mode lecteur.

Le document US 2007/0063041 décrit un terminal d'émission-réception par couplage inductif prévoyant la commutation d'une capacité selon le mode émission ou réception.

<u>Résumé</u>

Il serait souhaitable de disposer d'un dispositif apte à fonctionner en mode lecteur et en mode carte qui pallie tout ou partie des inconvénients des dispositifs usuels.

Plus particulièrement, il serait souhaitable de disposer d'un dispositif n'utilisant qu'une seule antenne pour un fonctionnement en mode carte et en mode lecteur et qui optimise l'adaptation en mode lecteur et l'accord en mode carte.

Il serait également souhaitable de disposer d'une solution particulièrement adaptée à une topologie à double amplificateur de sortie.

Il serait également souhaitable de disposer d'une solution ne requérant aucun autre élément inductif entre l'antenne et les circuits de démodulation.

Il serait également souhaitable de disposer d'une solution susceptible de commuter simplement d'un mode à un autre.

Il serait également souhaitable d'optimiser la consommation d'énergie du dispositif en particulier lorsqu'il fonctionne en mode lecteur.

Pour atteindre tout ou partie de ces objets ainsi que d'autres, il est prévu un dispositif d'émission-réception par couplage inductif comprenant :

des moyens de génération d'un signal alternatif destiné à exciter un circuit oscillant ;

des moyens destinés à moduler l'impédance du circuit oscillant lorsque des données doivent être émises, le circuit oscillant comportant :

un élément inductif formant antenne en parallèle avec un premier élément capacitif ; et

un deuxième et un troisième éléments capacitifs de même valeur en série avec un interrupteur, le tout en parallèle sur le premier élément capacitif et l'antenne, les moyens de modulation étant connectés aux bornes de l'antenne, deux bornes des moyens de génération du signal alternatif étant respectivement connectées aux bornes de l'interrupteur.

Selon un mode de réalisation, l'interrupteur est en position ouverte lorsque le dispositif doit émettre le signal alternatif et fonctionner en mode lecteur.

Selon un mode de réalisation, l'interrupteur est en position fermée lorsque le dispositif doit émettre des données en modulation de charge et fonctionner en mode carte.

Selon un mode de réalisation, les éléments capacitifs sont dimensionnés pour que, à la fréquence du signal alternatif d'émission, le circuit oscillant soit adapté à l'impédance de sortie des moyens de génération du signal alternatif.

Selon un mode de réalisation, la somme des valeurs des éléments capacitifs est choisie pour que le circuit oscillant soit accordé sur une fréquence d'un signal alternatif reçu d'un autre dispositif en mode carte.

Selon un mode de réalisation, ledit interrupteur est constitué d'un commutateur de sortie d'un amplificateur d'émission.

Selon un mode de réalisation, le dispositif comporte en outre un deuxième interrupteur de déconnexion des moyens de modulation lorsque le dispositif doit fonctionner en mode lecteur.

Il est également un prévu un procédé de configuration d'un dispositif d'émission-réception par couplage inductif entre un fonctionnement en mode lecteur et en mode carte, comportant l'étape de commuter des éléments capacitifs d'un unique circuit oscillant du dispositif selon le mode de fonctionnement.

Selon un mode de réalisation, l'état de repos du dispositif est en mode lecteur, celui-ci commutant en mode carte s'il détecte une tension d'alimentation extraite du circuit oscillant.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1 illustre de façon très schématique un système de transmission de données sans contact utilisant un dispositif lecteur-carte ;

la figure 2 est un schéma bloc fonctionnel d'un mode de réalisation d'un dispositif lecteur-carte ;

la figure 2A représente le schéma électrique équivalent du circuit oscillant 2 de la figure 2 en mode lecteur ;

la figure 3 est un schéma bloc fonctionnel d'un autre mode de réalisation d'un dispositif lecteur-carte ;

les figures 4A et 4B illustrent deux configurations du circuit oscillant du dispositif de la figure 3 ;

la figure 5 est un schéma bloc plus détaillé du dispositif lecteur-carte de la figure 2 ;

la figure 6 est une représentation partielle d'une variante du dispositif de la figure 5 ; et

la figure 7 est un schéma bloc électrique d'encore un autre mode de réalisation d'un dispositif lecteur-carte.

Description détaillée

De mêmes éléments ont été désignés par de mêmes références aux différentes figures. Par souci de clarté, seuls les éléments utiles à la compréhension de l'invention ont été représentés et seront décrits. En particulier, les protocoles de transmission de données en mode lecteur ou en mode carte n'ont pas été détaillés, les modes de réalisation décrits étant compatibles avec les protocoles habituels qui sont généralement normalisés, donc aisément disponibles. De plus, les applications des dispositifs lecteur-carte n'ont pas été détaillées, les modes de réalisation décrits étant là encore compatibles avec les différentes utilisations habituelles de dispositifs bi-mode ou mixtes. Par exemple, il peut s'agir de bornes de communication avec des étiquettes électroniques susceptibles de commuter en mode carte pour transférer des informations d'une borne à une borne voisine jusqu'à un serveur. Il peut également s'agir d'un dispositif portable susceptible de fonctionner selon des applications en mode carte (dans une application de transport par exemple) et en mode lecteur.

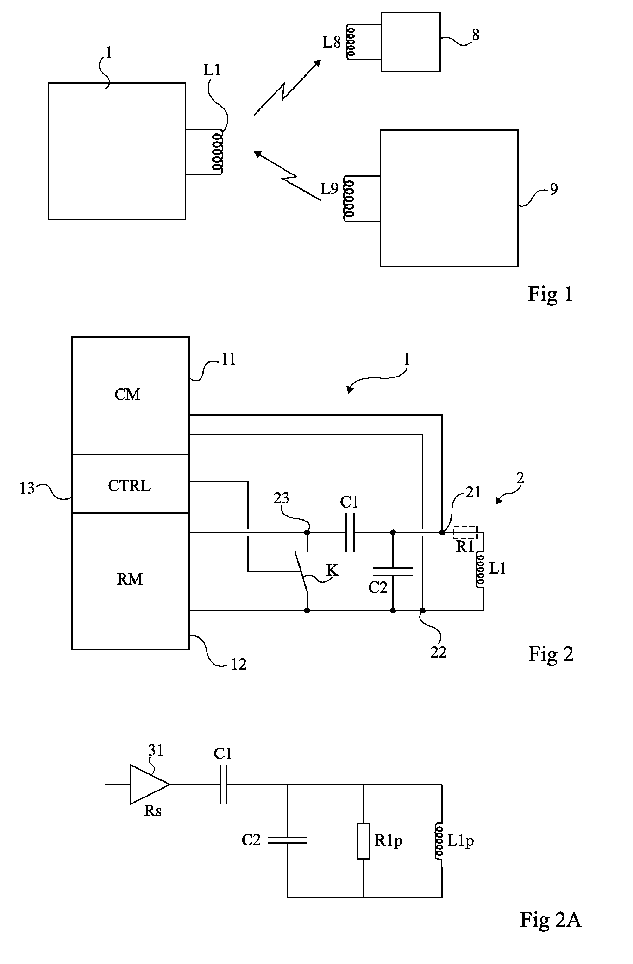

La figure 1 est un schéma bloc d'un système dans lequel un dispositif 1 est susceptible de communiquer en mode lecteur avec un transpondeur électromagnétique 8 (par exemple une carte à puce sans contact ou une étiquette électronique) ou en mode carte avec un autre lecteur 9 que celui-ci soit mixte ou non. Les trois dispositifs 1, 8 et 9 comportent un élément inductif L1, L8, L9 formant antenne, associé à un ou plusieurs éléments capacitifs (non représentés en figure 1) pour former un circuit oscillant ou résonant du dispositif concerné. Les autres éléments inclus dans les blocs illustrés en figure 1 comprennent les différents circuits d'exploitation et de transmission des données.

Pour une carte ou étiquette 8, ces circuits incluent au moins un élément de redressement du signal prélevé aux bornes du circuit oscillant pour en extraire une tension d'alimentation. Le transpondeur inclut également des éléments de rétromodulation pour modifier la charge qu'il constitue sur le champ électromagnétique généré par le lecteur et, le cas échéant, des circuits de démodulation d'informations transmises par le lecteur.

Pour un lecteur seul 9, celui-ci inclut au moins des éléments de génération d'un champ électromagnétique à destination des transpondeurs, susceptible d'être modulé en amplitude pour transmettre des données à ces derniers, et des éléments de démodulation de données reçues incluant des moyens pour détecter une modulation de charge effectuée par un transpondeur dans le champ.

Le dispositif mixte 1 comporte à la fois des moyens de modulation d'un champ électromagnétique qu'il génère et des moyens pour capter un champ équivalent et retransmettre des informations en rétromodulation.

La figure 2 est un schéma bloc d'un mode de réalisation d'un dispositif mixte 1. Ce schéma bloc est fonctionnel en ce sens que les différents éléments servant au mode carte et au mode lecteur n'ont pas été détaillés et ont été représentés dans des blocs distincts. En pratique, certains circuits peuvent cependant être partagés par les deux fonctions. Ainsi, un bloc 11 (CM) symbolise les différents circuits utilisés en mode carte, un bloc 12 (RM) symbolise les différents circuits utilisés en mode lecteur et un bloc 13 (CTRL) symbolise les différents circuits utilisés pour sélectionner le mode et synchroniser le fonctionnement. Dans l'exemple de la figure 2, le circuit oscillant 2 comporte, aux bornes 21 et 22 d'une antenne L1, un élément capacitif C2, ainsi qu'un élément capacitif C1 commutable. Cette commutation est effectuée, par exemple, par un interrupteur K connecté, en série avec l'élément capacitif C1 aux bornes des éléments C2 et L1. La résistance série (parasite) de l'antenne a été illustrée en pointillés par un élément résistif R1. Les bornes 21 et 22 sont par ailleurs reliées au bloc 11 de mode carte pour prélever un signal alternatif capté dans le champ d'un lecteur. Le point milieu 23 de l'association en série de l'interrupteur K et de l'élément capacitif C1, ainsi que la borne 22 sont reliés au bloc 12 de mode lecteur pour exciter le circuit oscillant 2 par un signal alternatif lorsque le dispositif fonctionne en mode lecteur.

L'interrupteur K est commandé par le bloc de commande 13 vers une position ouverte lorsque le dispositif doit fonctionner en mode lecteur et en position fermée lorsque le dispositif doit fonctionner en mode carte. Ainsi, en mode carte, l'élément capacitif C1 se retrouve en parallèle sur l'élément capacitif C2 et leurs valeurs respectives s'ajoutent. En mode lecteur, l'interrupteur K est ouvert et la capacité C1 participe au circuit d'adaptation d'impédance à la fréquence de la porteuse d'excitation du circuit oscillant (par exemple 13,56 MHz).

En considérant un étage de sortie (non représenté) du bloc 12 présentant une impédance de sortie Rs. En pratique, les impédances de sortie des amplificateurs du mode lecteur sont inférieures à la dizaine d'ohms et ne sont donc pas adaptées, à la fréquence de fonctionnement du dispositif, à l'impédance de l'antenne. Ceci requiert un schéma d'adaptation d'impédance.

L'adaptation en mode lecteur consiste à utiliser une topologie dite en "L" à deux éléments. Compte tenu des valeurs des éléments à adapter, ces deux éléments sont capacitifs (C1 et C2).

La figure 2A illustre le schéma électrique équivalent du circuit 2 de la figure 2 en mode lecteur avec la résistance R1 ramenée en parallèle (notée R1p) sur l'inductance (notée L1p). La figure 2A illustre la présence d'un amplificateur 31 (buffers) de sortie du bloc 12. Un tel amplificateur 31 est de type à trois états pour présenter, en mode carte, un état de haute impédance en sortie.

Le passage du modèle équivalent parallèle (figure 2A) au modèle équivalent série (figure 2) et inversement s'effectue usuellement avec les relations suivantes (pour simplifier les notations, on fait référence à L1, R1, L1p et R1p pour désigner les valeurs des éléments concernés) :

$$Q = \frac{Xs}{R1} = \frac{L1 \cdot \omega}{R1},$$

4

où Xs représente l'admittance série de l'amplificateur de sortie 31 et Q le coefficient de qualité du circuit L1-R1 série ;

$$R1p = \left(Q^2 + 1\right) \cdot R1 \;\; ;$$

et

$$L1p = \frac{X_{L1p}}{\omega} = \frac{R1p}{\omega \cdot Q} \;,$$

où $X_{L1p}$ représente l'admittance de l'inductance L1.

En mode carte, la somme des capacités C1 et C2 doit être telle que le circuit oscillant a pour fréquence de résonance, la fréquence du champ émis par un terminal distant.

En mode lecteur, l'adaptation est obtenue dans une topologie en "L" des éléments C1 et C2 comme illustrée en figure 2A. En considérant que la résistance linéique de l'antenne ramenée en parallèle est élevée (typiquement de l'ordre de quelques kilo-ohms), les capacités C1 et C2 sont choisies pour que les coefficients de qualité des éléments parallèles Qp et série Qs de l'adaptation soient égaux et puissent s'écrire :

$$Qs = Qp = \sqrt{\frac{R1p}{Rs} - 1} \;.$$

Les composants du circuit oscillant 2 sont donc dimensionnés en fonction des fréquences d'accord et d'adaptation. De préférence, les valeurs des condensateurs C1 et C2 sont déterminées à partir des besoins d'adaptation d'impédance en mode lecteur, connaissant la valeur d'inductance de l'antenne. En général, cette valeur d'inductance de l'antenne est liée à sa géométrie.

En tenant compte des conditions exprimées ci-dessus, les valeurs des éléments C1 et C2 peuvent être déterminées de la façon suivante :

$$C1 = \frac{1}{\omega \cdot \sqrt{Rs \cdot (R1p - Rs)}} \;\; ;$$

et

$$C2 = \frac{R1p \cdot \sqrt{\dfrac{Rs}{R1p - Rs}} - \omega \cdot L1p}{R1p \cdot \sqrt{\dfrac{Rs}{R1p - Rs}} \cdot \omega^2 \cdot L1p} \;,$$

ou

$$C2 = \frac{R1p - \omega \cdot L1p \cdot \sqrt{\dfrac{R1p}{Rs} - 1}}{\omega^2 \cdot R1p \cdot L1p} \;.$$

La valeur donnée à la capacité C2 doit, non seulement tenir compte des éléments ci-dessus (par exemple, être calculée par la relation ci-dessus), mais également tenir compte de la capacité d'entrée du dispositif, c'est-à-dire de la capacité connectée au circuit oscillant. Par exemple, si les éléments du dispositif connectés au circuit oscillant 2 rapportent une capacité de 20 pF, la valeur de la capacité C2 obtenue par la relation ci-dessus est diminuée de 20 pF. La valeur de la capacité C1 n'est pas modifiée.

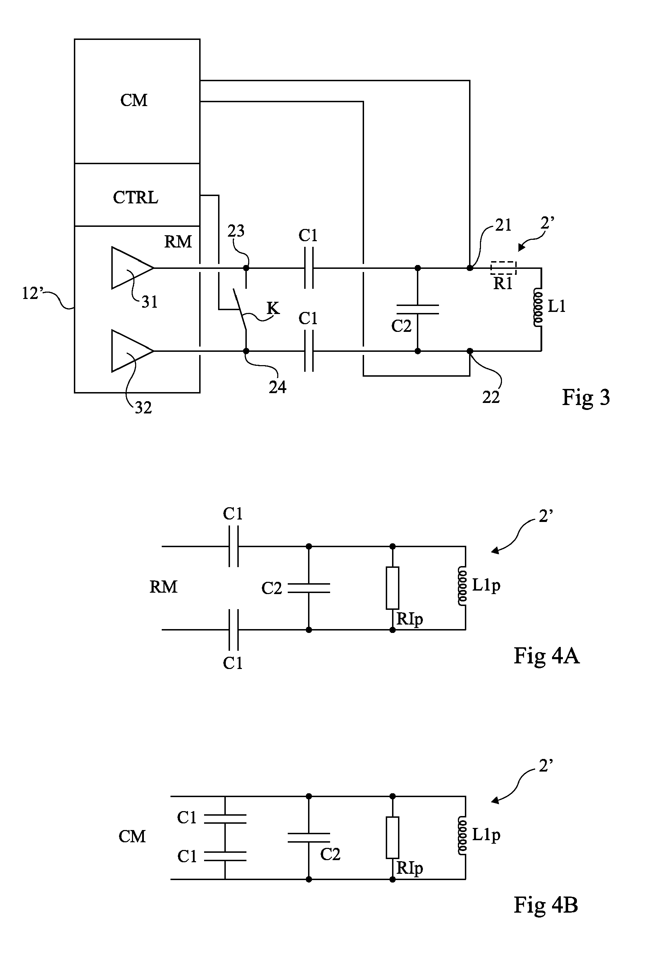

La figure 3 illustre un autre mode de réalisation dans lequel les circuits du mode lecteur comportent deux amplificateurs de sortie 31 et 32 respectivement connectés par des éléments capacitifs identiques C1 à la borne 21 et à la borne 22. L'interrupteur K relie les sorties respectives 23 et 24 des amplificateurs 31 et 32. Le côté carte du circuit n'est pas modifié. Les amplificateurs ou buffers de sortie 31 et 32 sont, en mode carte, commutés dans un état où leur sortie est en haute impédance de façon à ne pas interférer avec la réception. Par rapport au mode de réalisation précédent, la différence est liée à la topologie double amplificateur de sortie du bloc 12' qui requiert une structure d'adaptation symétrique.

La figure 4A illustre le schéma électrique équivalent du circuit oscillant 2' de la figure 3 lorsque le commutateur K est ouvert (mode lecteur).

La figure 4B illustre le schéma électrique équivalent du circuit oscillant 2' de la figure 3 lorsque le commutateur K est fermé (mode carte).

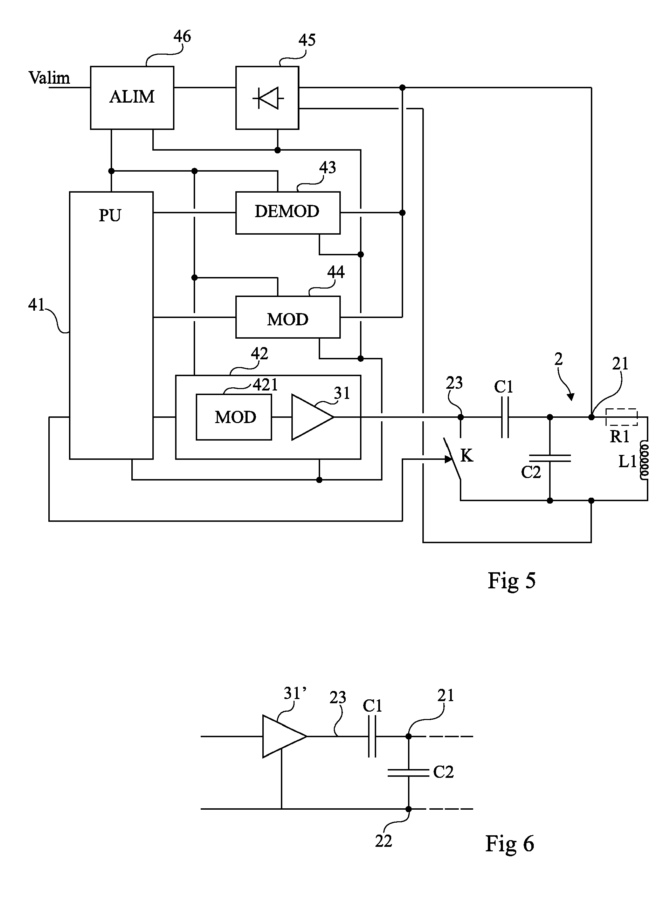

La figure 5 est un schéma bloc plus détaillé d'un dispositif susceptible de fonctionner à la fois en mode carte et en mode lecteur utilisant un circuit oscillant 2 tel qu'illustré par la figure 2.

Une unité de traitement 41 (PU) sert à exploiter les données à transmettre et les données reçues. En mode lecteur, l'unité 41 commande un circuit d'émission 42 comportant, entre autres, un modulateur 421 (MOD) et un amplificateur de sortie ou buffer 31 susceptible d'être commuté en haute impédance.

En mode carte, l'unité 41 reçoit des données extraites du circuit oscillant 2 par l'intermédiaire d'un démodulateur 43 (DEMOD) et est susceptible de moduler la charge constituée sur le circuit oscillant au moyen d'un modulateur 44 (MOD). Dans ce mode de fonctionnement, l'alimentation du dispositif peut être extraite du champ haute fréquence rayonné par le terminal distant au moyen d'un élément de redressement 45 (par exemple un pont redresseur) dont les entrées sont connectées aux bornes 21 et 22 du circuit oscillant et dont les sorties sont connectées à un circuit 46 d'alimentation (ALIM). Le circuit 46 est, par exemple, un régulateur de tension fournissant les tensions aux différents circuits 41, 42, 43, 44 du dispositif.

En mode lecteur, le régulateur 46 reçoit par exemple une tension d'alimentation Valim d'une batterie ou du réseau électrique de distribution.

La figure 6 illustre une variante selon laquelle l'interrupteur K est confondu avec l'amplificateur 31' de sortie du mode carte. De tels amplificateurs sont en effet le plus souvent réalisés sous la forme de transistors MOS. On peut alors utiliser le transistor MOS typiquement à canal N de la partie basse de l'amplificateur de sortie pour connecter la borne 23 à la masse.

Une telle réalisation peut également être envisagée dans le mode de réalisation de la figure 3 grâce aux transistors respectivement bas et haut des paires de transistors de sortie des amplificateurs 31 et 32.

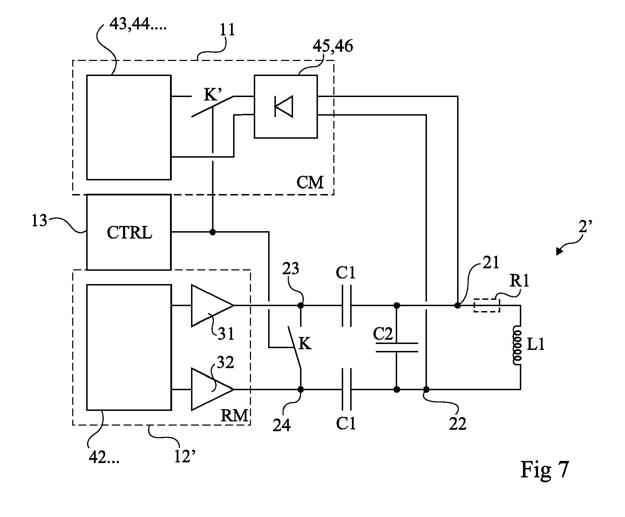

La figure 7 représente un autre mode de réalisation reprenant la constitution de celui de la figure 3 mais dans lequel un interrupteur additionnel K' déconnecte les circuits du mode carte lorsque le dispositif doit fonctionner en mode lecteur. En pratique, les circuits d'alimentation (redresseur 45 et circuit 46) reste de préférence connectés, c'est-à-dire que l'interrupteur K' est couplé entre ces circuits et le reste des circuits du mode carte (au moins les circuits 43 et 44, figure 5). Dans un mode de réalisation simplifié, le circuit de commande 13 déclenchant la fermeture de l'interrupteur K déclenche en même temps celle de l'interrupteur K'.

Par exemple, au repos, les interrupteurs K et K' sont ouverts et le dispositif est censé fonctionner en mode lecteur. Pour le cas où une tension d'alimentation est détectée au niveau du redresseur 45, même avec un circuit adapté et non accordé, la tension récupérée est suffisante pour que le circuit 13 ferme les interrupteurs K et K' et basculer en mode carte.

Selon une variante de réalisation de l'interrupteur K', celui-ci peut être intégré dans le régulateur de tension 46 pour former un régulateur commandé.

Il est désormais possible de partager une seule antenne (un seul enroulement inductif) pour un dispositif apte à fonctionner en mode lecteur et en mode carte. La réalisation proposée est particulièrement simple. A cet égard, on tire profit de la structure parallèle-série des circuits oscillants des lecteurs et cartes des systèmes auxquels les modes de réalisation s'appliquent. En particulier, à la différence de structures de type en $\pi$ ou en T, la disposition particulière des éléments capacitifs et inductifs des circuits oscillants permet une adaptation en L conduisant à un circuit accordé en mode carte.

A titre d'exemple particulier de réalisation, un dispositif destiné à fonctionner selon l'une des normes 14443 avec une fréquence de 13,56 Mhz peut être réalisé avec une antenne ayant une inductance de 1 $\mu$H et des éléments capacitifs C1 et C2 qui dans le mode de réalisation des figures 3 et 7 ont, cumulés, une valeur de 138 pF. En considérant que la résistance équivalente en parallèle de l'élément inductif (impédance de l'antenne) est de quelques kilo-ohms (par exemple de l'ordre de 3 kΩ) alors que la résistance de sortie des amplificateurs du mode lecteur est de quelques ohms (par exemple, de l'ordre de 4 ohms), la répartition entre les valeurs C1 et C2 effectuée d'après le calcul d'adaptation en mode lecteur à 13,56 MHz est, dans cet exemple de 107 pF pour C1 et 31 pF pour C2. Si les circuits auxquels est connecté le circuit oscillant 2 rapportent une capacité de l'ordre de 20 pF, la valeur donnée à la capacité C2 n'est plus que de 11 pF (31-20).

Divers modes de réalisation ont été décrits. Diverses variantes et adaptations sont à la portée de l'homme du métier. En particulier, le choix des valeurs à donner aux éléments capacitifs en fonction de l'antenne utilisée est à la portée de l'homme du métier à partir des indications fonctionnelles données ci-dessus et des fréquences d'adaptation et d'accord respectivement destinées au mode lecteur et au mode carte. De plus, bien que l'invention ait été plus particulièrement décrite en relation avec un exemple appliqué aux normes 14443, elle s'applique plus généralement à tout système d'émission-réception radiofréquence dans lequel un dispositif est susceptible de fonctionner en mode lecteur et en mode carte.

**Revendications**

1. Dispositif d'émission-réception par couplage inductif comprenant :

   des moyens (11) de génération d'un signal alternatif destiné à exciter un circuit oscillant ;
   des moyens (12, 12') destinés à moduler l'impédance du circuit oscillant lorsque des données doivent être émises,

   **caractérisé en ce que** le circuit oscillant comporte :

   un élément inductif (L1) formant antenne en parallèle avec un premier élément capacitif (C2) ;
   un deuxième et un troisième éléments capacitifs (C1) de même valeur en série avec un interrupteur (K), le tout en parallèle sur le premier élément capacitif et l'antenne, les moyens de modulation étant connectés aux bornes (21, 22) de l'antenne, deux bornes (23, 24) des moyens de génération du signal alternatif étant respectivement connectées aux bornes de l'interrupteur.

2. Dispositif selon la revendication 1, dans lequel l'interrupteur (K) est en position ouverte lorsque le dispositif doit émettre le signal alternatif et fonctionner en mode lecteur.

3. Dispositif selon la revendication 1 ou 2, dans lequel l'interrupteur (K) est en position fermée lorsque le dispositif doit émettre des données en modulation de charge et fonctionner en mode carte.

4. Dispositif selon l'une quelconque des revendications 1 à 3, dans lequel les éléments capacitifs sont dimensionnés pour que, à la fréquence du signal alternatif d'émission, le circuit oscillant soit adapté à l'impédance de sortie des moyens de génération du signal alternatif.

5. Dispositif selon l'une quelconque des revendications 1 à 4, dans lequel la somme des valeurs des éléments capacitifs (C1, C2) est choisie pour que le circuit oscillant soit accordé sur une fréquence d'un signal alternatif reçu d'un autre dispositif en mode carte.

6. Dispositif selon l'une quelconque des revendications 1 à 5, dans lequel ledit interrupteur (K) est constitué d'un commutateur de sortie d'un amplificateur d'émission (31, 32).

7. Dispositif selon l'une quelconque des revendications 1 à 6, comportant en outre un deuxième interrupteur (K') de déconnexion des moyens de modulation lorsque le dispositif doit fonctionner en mode lecteur.

8. Procédé de configuration d'un dispositif d'émission-réception par couplage inductif conforme à l'une quelconque des revendications 1 à 7, entre un fonctionnement en mode lecteur et en mode carte, **caractérisé en ce qu'**il comporte l'étape de commuter des éléments capacitifs (C1, C2) d'un unique circuit oscillant du dispositif selon le mode de fonctionnement.

9. Procédé selon la revendication 8, dans lequel l'état de repos du dispositif est en mode lecteur, celui-ci commutant en mode carte s'il détecte une tension d'alimentation extraite du circuit oscillant.

Fig 1

Fig 2

Fig 2A

Fig 3

Fig 4A

Fig 4B

Fig 5

Fig 6

Fig 7

Europäisches Patentamt

European Patent Office

Office européen des brevets

# RAPPORT DE RECHERCHE EUROPEENNE

Numéro de la demande

EP 09 15 5769

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2007/063041 A1 (KAMIYAMA KENICHI [JP] ET AL) 22 mars 2007 (2007-03-22) * abrégé * * page 4, alinéa 68 - page 5, alinéa 91 * * figure 5 * ----- | 1-9 | INV. H04B5/00 G06K7/00 G06K19/07 H04B5/02 |
| A | US 2004/113790 A1 (HAMEL MICHAEL JOHN [US] ET AL) 17 juin 2004 (2004-06-17) * abrégé * * figure 1 * ----- | 1-9 | |
| A | WO 00/27137 A (CHECKPOINT SYSTEMS INC [US]) 11 mai 2000 (2000-05-11) * abrégé * * page 11, ligne 8 - page 15, ligne 24 * * figure 2 * ----- | 1-9 | |

| | DOMAINES TECHNIQUES RECHERCHES (IPC) |
|---|---|
| | H04B G06K |

Le présent rapport a été établi pour toutes les revendications

| Lieu de la recherche | Date d'achèvement de la recherche | Examinateur |
|---|---|---|
| La Haye | 23 juin 2009 | Yang, Betty |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 15 5769

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-06-2009

| Document brevet cité<br>au rapport de recherche | | Date de<br>publication | Membre(s) de la<br>famille de brevet(s) | | Date de<br>publication |
|---|---|---|---|---|---|
| US 2007063041 | A1 | 22-03-2007 | JP | 2007088661 A | 05-04-2007 |
| US 2004113790 | A1 | 17-06-2004 | US | 2007285248 A1 | 13-12-2007 |
| WO 0027137 | A | 11-05-2000 | AT | 246382 T | 15-08-2003 |
| | | | AU | 751418 B2 | 15-08-2002 |
| | | | AU | 1112900 A | 22-05-2000 |
| | | | CA | 2349409 A1 | 11-05-2000 |
| | | | CN | 1324545 A | 28-11-2001 |
| | | | DE | 69910061 D1 | 04-09-2003 |
| | | | DE | 69910061 T2 | 06-05-2004 |
| | | | DK | 1127469 T3 | 27-10-2003 |
| | | | EP | 1127469 A1 | 29-08-2001 |
| | | | ES | 2205899 T3 | 01-05-2004 |
| | | | JP | 4261065 B2 | 30-04-2009 |
| | | | JP | 2002529982 T | 10-09-2002 |
| | | | TW | 460852 B | 21-10-2001 |
| | | | US | 6072383 A | 06-06-2000 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1327222 A
- US 20070063041 A